# EUROPÄISCHE PATENTSCHRIFT

(11) **EP 4 229 404 B1**
(45) Veröffentlichungstag und Bekanntmachung des Hinweises auf die Patenterteilung: **27.08.2025**
(21) Anmeldenummer: 21789632.3
(22) Anmeldetag: 04.10.2021
(51) Int. Cl.: G01N 27/406, G01N 27/417

(54) **VERFAHREN ZUR DIAGNOSE EINER BREITBAND-LAMBDASONDE**
METHOD FOR CHECKING A BROAD-BAND LAMBDA PROBE
PROCEDE DE DIAGNOSTIC D'UNE SONDE LAMBDA A LARGE BANDE

(30) Priorität: 13.10.2020 DE 102020212885
(43) Veröffentlichungstag der Anmeldung: 23.08.2023
(73) Patentinhaber: Robert Bosch GmbH, 70442 Stuttgart (DE)
(72) Erfinder: LEDERMANN, Bernhard, 71263 Weil Der Stadt (DE); KREMER, Stefan, 70825 Korntal-Muenchingen (DE)
(86) Internationale Anmeldenummer: PCT/EP2021/077210
(87) Internationale Veröffentlichungsnummer: WO 2022/078784

(56) Entgegenhaltungen:
- DE-A1- 102008 011 231
- DE-A1- 102011 004 073
- DE-A1- 102011 077 171
- DE-A1- 102019 203 687
- DE-A1- 102019 204 827

## Beschreibung

### Stand der Technik

Aus der DE 10 2008 001 697 A1 ist bereits ein Steuergerät zum Betreiben einer Breitband-Lambdasonde bekannt sowie zugehörige Betriebsverfahren.

Lambdasonden und zugehörige Steuergeräte sind auch in der DE 10 2008 011 231 A1 und in der DE 10 2011 077 171 A1 der Anmelderin offenbart. Verfahren zur Erkennung eines Kabelbruchs sind in diesen zwei Dokumenten ebenfalls offenbart.

Die gegenwärtige Erfindung löst das Problem, ein einfaches Verfahren und eine entsprechende Vorrichtung bereitzustellen, die es erlauben zu erkennen, ob, und wenn/falls ja, welche Leitung unterbrochen ist.

Es wird im von einer Breitband-Lambdasonde ausgegangen, die einen ersten elektrischen Anschluss IPE und einen zweiten elektrischen Anschluss APE und einen dritten elektrischen Anschluss MES aufweist und eine elektrochemische Pumpzelle aufweist, die zwischen den ersten elektrischen Anschluss IPE und den zweiten elektrischen Anschluss APE geschaltet ist, und die einen elektrischen Kalibierwiderstand aufweist, der zwischen den zweiten elektrischen Anschluss APE und den dritten elektrischen Anschluss MES geschaltet ist.

Die Breitband-Lambdasonde kann einen vierten elektrischen Anschluss aufweisen und eine elektrochemische Referenzzelle aufweisen, die zwischen den ersten elektrischen Anschluss und den vierten elektrischen Anschluss geschaltet ist.

Das Steuergerät weist folgendes auf:
- Einen ersten elektrischen Eingang IPE',
- einen zweiten elektrischen Eingang APE',
- einen dritten elektrischen Eingang MES',
- einen Messwiderstand, der den zweiten Eingang APE' mit dem dritten Eingang MES' verbindet,
- eine Stromquelle, die durch einen zwischengeschalteten Schalter Swt_{APE} mit dem zweiten Eingang APE' verbindbar ist,
- einen weiteren Schalter Swt_{MES} und einen Referenzwiderstand, wobei der der Referenzwiderstand einerseits über den weiteren Schalter Swt_{MES} mit dem dritten Eingang MES' und mit dem Messwiderstand verbindbar ist und andererseits mit einem Bezugspotential verbunden ist,
- ein Messmittel, um die über dem Messwiderstand abfallende Spannung Uₐₘ zu messen.

Das Messmittel kann ein Analog-Digital-Wandler sein. Dann kann die über dem Messwiderstand abfallende Spannung digital weiterverarbeitet werden.

Es kann vorgesehen sein, dass das Steuergerät einen Multiplexer aufweist, der eingangsseitig mit dem zweiten Eingang APE' und dem dritten Eingang MES' verbunden ist und der ausgangsseitig mit dem Messmittel verbunden ist.

Das erfindungsgemäße Verfahren zur Diagnose von elektrischen Leitungen zwischen dem Steuergerät und einer Breitband-Lambdasonde sieht vor, dass eine erste Leitung den ersten Anschluss IPE der Breitband-Lambdasonde mit dem ersten Eingang IPE' des Steuergeräts verbindet, eine zweite Leitung den zweiten Anschluss APE der Breitband-Lambdasonde mit dem zweiten Eingang APE' des Steuergeräts verbindet und eine dritte Leitung den dritten Anschluss MES der Breitband-Lambdasonde mit dem dritten Eingang MES' des Steuergeräts verbindet, und erfolgt in folgenden Schritten:
- Messen der über dem Messwiderstand abfallenden Spannung bei geschlossenem zwischengeschalteten Schalter Swt_{APE} und geöffnetem weiteren Schalter Swt_{MES},
- Bewerten, ob die zweite Leitung unterbrochen ist und/oder Bewerten, ob die dritte Leitung unterbrochen ist, wobei die Bewertung/ die jeweilige Bewertung auf Basis der an dem Messwiderstand abfallenden Spannung erfolgt.

Die Bewertung, ob die zweite Leitung unterbrochen ist, erfolgt erfindungsgemäß auf Basis des Vergleichs der an dem Messwiderstand abfallenden Spannung mit einem oberen vorgegebenen Schwellwert und die Bewertung, ob die dritte Leitung unterbrochen ist, erfolgt erfindungsgemäß auf Basis des Vergleichs der an dem Messwiderstand abfallenden Spannung mit einem unteren vorgegebenen Schwellwert.

Es ist erfindungsgemäß vorgesehen, dass bewertet wird, dass die zweite Leitung unterbrochen ist, wenn die an dem Messwiderstand abfallende Spannung größer ist als ein oberer vorgegebener Schwellwert; und dass die dritte Leitung unterbrochen ist, wenn die an dem Messwiderstand abfallende Spannung kleiner ist als ein unterer vorgegebener Schwellwert; undr dass weder die erste Leitung unterbrochen ist noch die zweite Leitung unterbrochen ist, wenn die an dem Messwiderstand abfallende Spannung größer ist als der untere Schwellwert und kleiner ist als der obere Schwellwert.

Eine Weiterbildung der Erfindung erfolgt in Reaktion auf die Beobachtung, dass die an dem Messwiderstand abfallende Spannung im Fall einer intakten zweiten Leitung und einer intakten dritten Leitung unter Umständen so klein sein kann, dass es einen erhöhten technischen Aufwand bereitet, sie sicher von einer noch kleineren Spannung (z.B. der Spannung 0V) zu unterscheiden, die im Rahmen des Verfahrens eine unterbrochene dritte Leitung indiziert.

Dem wird gemäß der Weiterbildung dadurch begegnet, dass eine erste über dem Messwiderstand abfallende Spannung gemessen wird, während die Stromquelle einen ersten Strom generiert, und dass eine zweite über dem Messwiderstand abfallende Spannung gemessen wird, während die Stromquelle einen zweiten Strom generiert, wobei der zweite Strom stärker ist als der erste Strom, und dass die Bewertung, ob die zweite Leitung unterbrochen ist, auf Basis der zweiten an dem Messwiderstand abfallenden Spannung erfolgt und die Bewertung, ob die dritte Leitung unterbrochen ist, auf Basis der ersten an dem Messwiderstand abfallenden Spannung erfolgt. Beispielsweise kann der erste Strom 0,1 mA betragen und der zweite Strom 10 mA betragen. Beispielsweise kann die Stromquelle entsprechende Konstantstromquellen umfassen, die beispielsweise über Schalter entsprechend verbindbar sind.

In Reaktion auf die gleiche Problematik kann in zusätzlicher oder alternativer Weiterbildung vorgesehen sein, dass zunächst eine Vorbewertung erfolgt, dass (bzw. ob) eine der zweiten Leitung und der dritten Leitung unterbrochen ist.

Lediglich wenn dies der Fall ist, wird das Diagnoseverfahren weiter fortgesetzt, indem bewertet wird, dass die zweite Leitung unterbrochen ist, wenn die an dem Messwiderstand abfallende Spannung größer ist als ein Grenzwert, und bewertet wird, dass die dritte Leitung unterbrochen ist, wenn die an dem Messwiderstand abfallende Spannung nicht größer ist als der Grenzwert.

Grundsätzlich kann die Vorbewertung auf Basis beliebiger dazu geeigneter Messungen und/oder Kriterien erfolgen. Beispielsweise kann die Vorbewertung in folgenden Verfahrensschritten erfolgt:
- Messen der über dem Messwiderstand abfallenden Spannung bei geschlossenem zwischengeschalteten Schalter Swt_{APE} und geschlossenem weiteren Schalter Swt_{MES},
- Bewerten, dass eine der zweiten Leitung oder der dritten Leitung unterbrochen ist, wenn die an dem Messwiderstand abfallende Spannung größer ist als ein Mindestwert.

Es wird auch ein Verfahren zur Bestimmung des Wertes des Kalibrierwiderstands der Breitband-Lambdasonde offenbart. Diese Bestimmung erfolgt dabei auf Basis einer ersten Messung der am Messwiderstand abfallenden Spannung bei geschlossenem zwischengeschalteten Schalter Swt_{APE} und geschlossenem weiteren Schalter Swt_{MES}.

In Weiterbildung hierzu kann eine zweite Messung der am Messwiderstand abfallenden Spannung bei geschlossenem zwischengeschalteten Schalter Swt_{APE} und geöffnetem weiteren Schalter Swt_{MES} erfolgen, wobei die Bestimmung des Werts des Kalibrierwiderstands auf Basis der ersten Messung und der zweiten Messung derart erfolgt, dass der Einfluss des Widerstands der zweiten Leitung auf das Ergebnis kompensiert wird.

In Rahmen der Erfindung werden an verschieden Stellen Bewertungen vorgenommen, ob ein gewisses Ereignis eingetreten ist oder nicht, beispielsweise ob eine Leitungen unterbrochen oder intakt ist. Auf technischer Ebene kann eine solche Bewertung dadurch realisiert sein, dass in einem elektronischen Speicher des Steuergeräts ein Speicherbit auf einen der entsprechenden Bewertung zugeordneten Wert gesetzt wird (zum Beispiel "low" oder "high").

### Zeichnung

- Figur 1: zeigt ein Beispiel einer erfindungsgemäßen Vorrichtung in einem ersten Schaltzustand.
- Figur 2: zeigt die Vorrichtung aus Figur 1 in einem zweiten Schaltzustand.
- Figur 3: zeigt die Vorrichtung aus Figur 1 in einem dritten Schaltzustand.
- Figur 4: zeigt die Verfahrensschritte des ersten Beispiels eines erfindungsgemäßen Verfahrens zur Diagnose von elektrischen Leitungen anhand eines Flussdiagramms.
- Figur 5: zeigt die Verfahrensschritte des zweiten Beispiels eines erfindungsgemäßen Verfahrens zur Diagnose von elektrischen Leitungen anhand eines Flussdiagramms.
- Figur 6: zeigt die Verfahrensschritte des Verfahrens zur Bestimmung des Wertes eines Kalibrierwiderstands einer Breitband-Lambdasonde anhand eines Flussdiagramms.

### Beschreibung der Ausführungsbeispiele

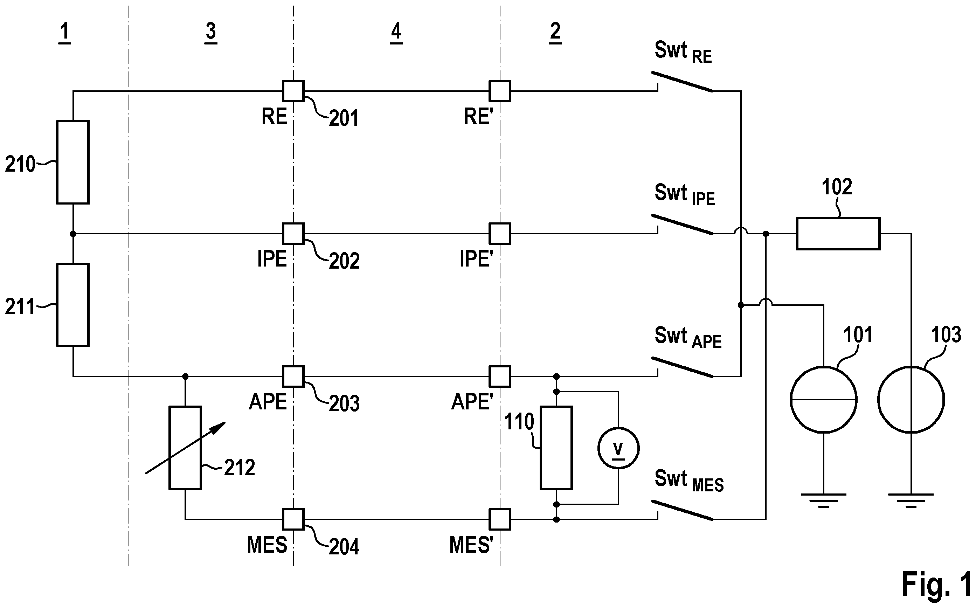

Die Figur 1 zeigt als schematisches Schaltbild ein Steuergerät 2 in Verbindung mit einer Breitband-Lambdasonde 1. Die Verbindung erfolgt dabei über einen Stecker 3 der Breitband-Lambdasonde 1 und über einen Kabelbaum 4.

Die Breitband-Lambdasonde 1 weist einen ersten elektrischen Anschluss IPE, einen zweiten elektrischen Anschluss APE, einen dritten elektrischen Anschluss MES und einen vierten elektrischen Anschluss RE auf. Die Breitband-Lambdasonde 1 weist ferner eine elektrochemische Pumpzelle 211 auf, die zwischen den ersten elektrischen Anschluss IPE und den zweiten elektrischen Anschluss APE geschaltet ist, sowie eine elektrochemische Referenzzelle 210, die zwischen den ersten elektrischen Anschluss IPE und den vierten elektrischen Anschluss RE geschaltet ist. Die Breitband-Lambdasonde 1 weist ferner einen, beispielsweise durch Laserschnitt einstellbaren, elektrischen Kalibierwiderstand 212 auf, der zwischen den zweiten elektrischen Anschluss APE und den dritten elektrischen Anschluss MES geschaltet ist. Im Beispiel befindet sich der elektrische Kalibierwiderstand 212 in einem Stecker 3 der Breitband-Lambdasonde 1, der mit dem Kabelbaum 4 verbindbar ist.

Das Steuergerät 2 weist einen ersten elektrischen Eingang IPE', einen zweiten elektrischen Eingang APE', einen dritten elektrischen Eingang MES' und einen vierten elektrische Eingang RE' auf. Es weist einen Messwiderstand 110 auf, der den zweiten Eingang APE' mit dem dritten Eingang MES' verbindet, es weist eine Stromquelle 101 auf, die durch einen zwischengeschalteten Schalter Swt_{APE} des Steuergeräts 2 mit dem zweiten Eingang APE' verbindbar ist, und es weist einen weiteren Schalter Swt_{MES} und einen Referenzwiderstand 102 auf, wobei der der Referenzwiderstand 102 einerseits über den weiteren Schalter Swt_{MES} mit dem dritten Eingang MES' und mit dem Messwiderstand 110 verbindbar ist und andererseits mit einem Bezugspotential 103 des Steuergeräts 2 verbunden ist. Der erste Eingang IPE' des Steuergeräts 2 ist über einen ersten Schalter Swt_{IPE} mit dem Referenzwiderstand 102 verbindbar. Der vierte Eingang RE' des Steuergeräts 2 ist über einen vierten Schalter Swt_{RE} mit der Stromquelle 101 verbindbar.

Das Steuergerät 2 weist ferner ein Messmittel V auf, um die über dem Messwiderstand 110 abfallende Spannung Uₐₘ zu messen. In diesem Beispiel handelt es sich um einen Analog-Digital-Wandler, mit zwei Eingängen, die über einen Multiplexer des Steuergeräts 2 mit dem zweiten Eingang APE' und dem dritten Eingang MES' des Steuergeräts 2 verbindbar sind.

Der Kabelbaum 4 umfasst vier Leitungen, nämlich eine erste Leitung 202, die den ersten Anschluss IPE der Breitband-Lambdasonde 1 mit dem ersten Eingang IPE' des Steuergeräts 2 verbindet, eine zweite Leitung 203, die den zweiten Anschluss APE der Breitband-Lambdasonde 1 mit dem zweiten Eingang APE' des Steuergeräts 2 verbindet, eine dritte Leitung 204, die den dritten Anschluss MES der Breitband-Lambdasonde 1 mit dem dritten Eingang MES' des Steuergeräts 2 verbindet, und eine vierte Leitung 201, die den vierten Anschluss RE der Breitband-Lambdasonde 1 mit dem vierten Eingang RE' des Steuergeräts 2 verbindet.

In der Figur 1 sind der zwischengeschaltete Schalter Swt_{APE}, der weitere Schalter Swt_{MES}, der erste Schalter Swt_{IPE} und der vierte Schalter Swt_{RE} geöffnet dargestellt. Im Betrieb der Lambdasonde 1 und im Rahmen der erfindungsgemäßen Verfahren werden die Schalter hingegen individuell angesteuert, wie weiter unten im Einzelnen erklärt wird.

Im Rahmen der Erfindung generiert die Stromquelle 101 Ströme und prägt sie in den betreffenden Stromkreis ein, zumindest sobald der zweite Schalter Swt_{APE} geschlossen ist. Es kann sich bei der Stromquelle 101 beispielsweise um eine Konstantstromquelle handeln, die beispielsweise einen Strom von 0,1 mA oder einen Strom von 10 mA generiert, beispielsweise wahlweise generiert.

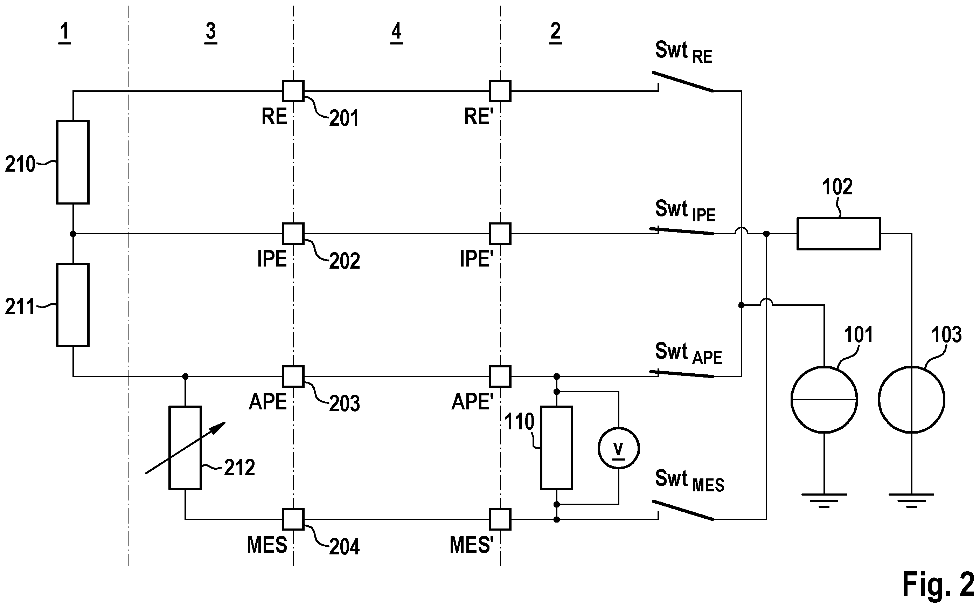

Bei der Diagnose von elektrischen Leitungen 203, 204 zwischen dem Steuergerät 2 und der Breitband-Lambdasonde 1 ist beispielsweise vorgesehen, dass der zwischengeschaltete Schalter Swt_{APE} geschlossen ist, dass der erste Schalter Swt_{IPE} geschlossen ist und dass der weitere Schalter Swt_{MES} geöffnet ist. Der vierte Schalter Swt_{RE} kann geöffnet sein, siehe Figur 2.

In dieser Schaltkonfiguration erfolgt also ein Stromfluss I, ausgehend von der Stromquelle 101, durch die zweite Leitung 203, durch die Pumpzelle 211, durch die erste Leitung 202, über den Referenzwiderstand 102 zu dem Referenzpotential 103. Parallel zu der zweiten Leitung 203 sind der Messwiderstand 110, die dritte Leitung 204 und der Kalibrierwidertand 212 zueinander in Reihe geschaltet. In dieser Schaltkonfiguration erfolgt eine Messung der über dem Messwiderstand 110 abfallenden Spannung Uₐₘ mit dem Messmittel V.

Die Schaltkonfiguration gemäß Figur 2 entspricht einer Schaltkonfiguration, die auch im Rahmen der Messung einer Sauerstoffkonzentration in einem Abgas einer Brennkraftmaschine durch die Breiband-Lambdasonde 1 verwendet wird. Der von der Stromquelle 101 eingespeiste Strom I bewirkt - gegebenenfalls als pulsweitenmoduliertes Signal - einen entsprechenden Sauerstoffionenstrom durch die Pumpzelle 211, dessen Mittelwert proportional zu der Sauerstoffkonzentration im Abgas ist. Üblicherweise kann der von der Stromquelle 101 eingespeiste Strom I (im Mittel) die Stellgröße eines Regelkreises sein, dessen Eingangsgröße eine sich an der Referenzzelle 210 der Breitband-Lambdasonde 1 ausbildende Nernstspannung ist. Letztere wird dabei üblicherweise auf einen Sollwert, beispielsweise 450mV, geregelt.

Insofern kann das erfindungsgemäße Diagnoseverfahren zumindest teilweise zeitlich parallel zu dem Betrieb der Breiband-Lambdasonde 1 zur Messung einer Sauerstoffkonzentration in einem Abgas einer Brennkraftmaschine erfolgen.

Sollte dabei das Messverfahren als solches in einem Zeitintervall, in dem eine Diagnose erwünscht ist, lediglich unzureichend große (mittlere) Pumpströme vorsehen, besteht die Möglichkeit, aus Sicht des Messverfahrens zusätzliche Pumpstrompulse einzuprägen. Diese zusätzlichen Pumpströme können vorteilhafterweise in Form von Pulsen und Gegenpulsen mit zueinander unterschiedlicher Polarität vorgesehen werden. Auf diese Weise hat das Diagnoseverfahren auch in diesem Fall auf das Messverfahren - und in der Folge ggf. auf den Betrieb der Brennkraftmaschine - lediglich minimale Nebenwirkungen.

Im Beispiel wird davon ausgegangen, dass bei intakten Leitungen 203, 204 die Widerstandswerte der zweiten und der dritten Leitung 203, 204 deutlich kleiner sind als die Widerstandswerte des Kalibrierwiderstand 212 und des Messwiderstands 110, zum Beispiel jeweils um einen Faktor 100 oder 1000 kleiner. Die am Messwiderstand 110 abfallende Spannung Uₐₘ hat folglich einen kleinen aber doch von 0V verschiedenen Wert, beispielsweise 50µV oder 5mV.

Im Beispiel wird ferner davon ausgegangen, dass bei einer unterbrochenen dritten Leitung 204 aber intakten zweiten Leitung 203 der Widerstandswert der dritten Leitung 204 (gerade aufgrund der Unterbrechung) sehr groß ist, deutlich größer als der Widerstandswert der zweiten Leitung 203, beispielsweise unendlich. Es fließt dann kein Strom mehr durch den Messwiderstand 110 und die am Messwiderstand 110 abfallende Spannung hat folglich den Wert 0V.

Im Beispiel wird ferner davon ausgegangen, dass bei einer unterbrochenen zweiten Leitung 203 aber intakten dritten Leitung 204 der Widerstandswert der zweiten Leitung 203 (wiederum gerade aufgrund der Unterbrechung) sehr groß ist, beispielsweise wiederum unendlich. Es fließt dann der von der Stromquelle 101 generierte Strom I vollständig durch den Messwiderstand 110 und die an dem Messwiderstand 110 abfallende Spannung ist recht groß, beispielsweise 300mV.

Im Beispiel wird nun ein unterer Schwellwert vorgegeben, beispielsweise 25mV, und ein oberer Schwellwert vorgegeben, beispielsweise 100mV. Mit diesen Schwellwerten wird die am Messwiderstand 110 abfallende Spannung Uₐₘ verglichen.

Es wird in diesem ersten Beispiel bewertet, dass die zweite Leitung 203 unterbrochen ist, wenn die an dem Messwiderstand 110 abfallende Spannung Uₐₘ größer ist als der obere vorgegebene Schwellwert, dass die dritte Leitung 204 unterbrochen ist, wenn die an dem Messwiderstand 110 abfallende Spannung Uₐₘ kleiner ist als der untere vorgegebene Schwellwert, und dass weder die zweite Leitung 203 unterbrochen ist noch die dritte Leitung 204 unterbrochen ist, wenn die an dem Messwiderstand abfallende Spannung Uₐₘ größer ist als der untere Schwellwert und kleiner ist als der obere Schwellwert.

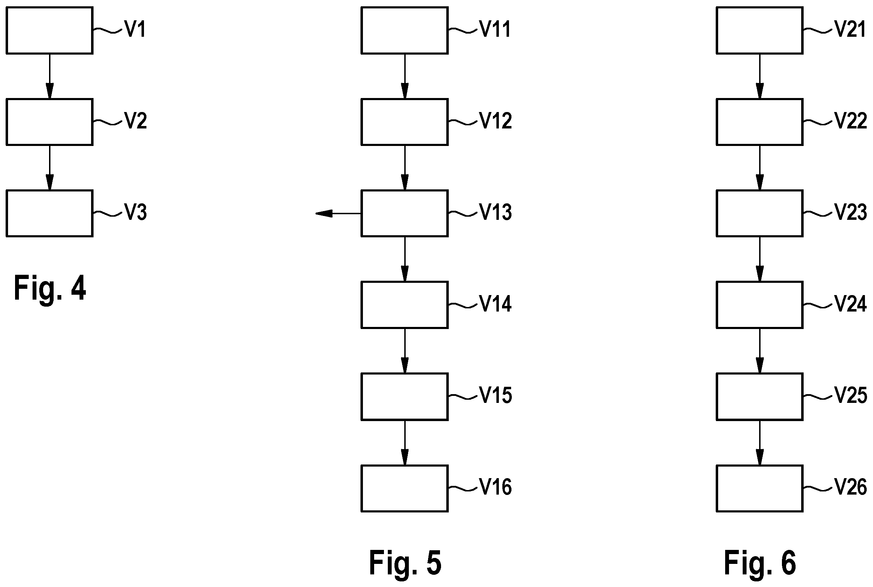

Die Verfahrensschritte gemäß diesem Beispiel sind in der Figur 4 exemplarisch als Flussdiagramm dargestellt:
- Schritt V1: Herstellen einer Schaltkonfiguration gemäß Figur 2 mit geschlossenem zwischengeschaltetem Schalter Swt_{APE} und geöffnetem weiteren Schalter Swt_{MES} sowie geschlossenem ersten Schalter Swt_{IPE} und geöffnetem vierten Schalter Swt_{RE},
- Schritt V2: Messung der über dem Messwiderstand 110 abfallenden Spannung Uₐₘ,
- Schritt V3: Vergleich der über dem Messwiderstand 110 abfallenden Spannung Uₐₘ mit einem oberen vorgegebenen Schwellwert und mit einem unteren vorgegebenen Schwellwert und Bewertung, dass die zweite Leitung 203 unterbrochen ist, wenn die an dem Messwiderstand 110 abfallende Spannung Uₐₘ größer ist als der obere vorgegebene Schwellwert, dass die dritte Leitung 204 unterbrochen ist, wenn die an dem Messwiderstand 110 abfallende Spannung Uₐₘ kleiner ist als der untere vorgegebene Schwellwert, und dass weder die zweite Leitung 203 unterbrochen ist noch die dritte Leitung 204 unterbrochen ist, wenn die an dem Messwiderstand 110 abfallende Spannung Uₐₘ größer ist als der untere Schwellwert und kleiner ist als der obere Schwellwert.

Die Bewertung gemäß dem ersten Beispiel setzt voraus, dass vergleichsweise kleine Spannungen Uₐₘ von der Spannung 0V unterschieden werden können, also eine hohe Messgenauigkeit des Messmittels V gegeben ist.

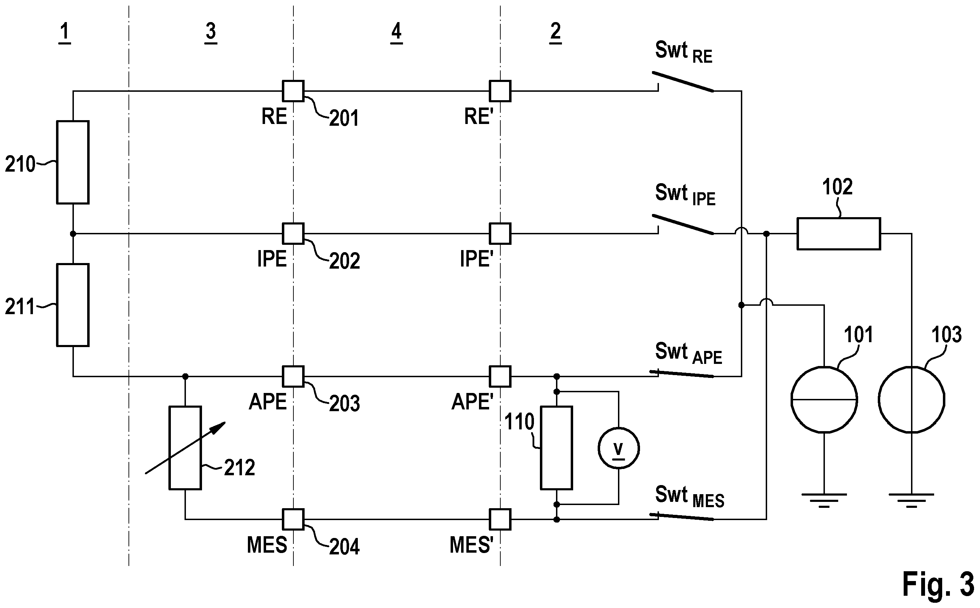

In einem zweiten Beispiel ist dies nicht notwendigerweise der Fall. Hierbei wird zunächst eine Schaltkonfiguration gemäß Figur 3 hergestellt, das heißt, der zwischengeschaltete Schalter Swt_{APE} und der weitere Schalter Swt_{MES} sind geschlossen, der erste Schalter Swt_{IPE} und der zweite Schalter Swt_{RE} sind geöffnet. Ist die am Messwiderstand 110 so abfallende Spannung Uₐₘ kleiner als ein vorgegebener Grenzwert (im Beispiel 100 mV), so liegt das daran, dass durch den Messwiderstand 110 ein eher kleiner Strom fließt, weil die zweite und die dritte Leitung 203, 204 intakt sind. In diesem Fall wird diese Bewertung unmittelbar vorgenommen.

Lediglich andernfalls, wenn also in der in Figur 3 gezeigten Schaltkonfiguration die an dem Messwiderstand 110 abfallende Spannung Uₐₘ größer ist als der vorgegebene Grenzwert (im Beispiel 100 mV), so liegt das daran, dass durch den Messwiderstand 110 ein eher großer Strom fließt, weil nicht sowohl die zweite als auch die dritte Leitung 203, 204 intakt sind, also weil die zweite Leitung 203 unterbrochen ist oder weil die dritte Leitung 204 unterbrochen ist.

Um diese beiden Fälle noch zu unterscheiden, wird dann die in der Figur 2 gezeigte Schaltkonfiguration wie im ersten Beispiel herbeigeführt, das heißt, dass der zwischengeschaltete Schalter Swt_{APE} geschlossen ist, dass der erste Schalter Swt_{IPE} geschlossen ist und dass der weitere Schalter Swt_{MES} und der vierte Schalter Swt_{RE} geöffnet sind.

Im Unterschied zum ersten Beispiel wird die an dem Messwiderstand 110 abfallende Spannung Uₐₘ nun jedoch nur noch mit dem oberen Schwellwert (z.B. 100mV) verglichen. Ist sie größer als der obere Schwellwert, wird bewertet, dass die zweite Leitung 203 unterbrochen ist. Ist sie nicht größer als der obere Schwellwert, wird geschlossen, dass die dritte Leitung 204 unterbrochen ist. Letzteres ist gerechtfertigt, da ja bereits zuvor (siehe oben) festgestellt worden war, dass mindestens eine der zweiten und der dritten Leitung 203, 204 unterbrochen ist, die Möglichkeit, dass keine dieser beiden Leitungen 203, 204 unterbrochen ist, zu diesem Zeitpunkt des Verfahrens also bereits ausgeschlossen worden ist.

Die Verfahrensschritte gemäß diesem Beispiel sind in der Figur 5 als Flussdiagramm dargestellt:
- Schritt V11: Herstellen einer Schaltkonfiguration gemäß Figur 3, das heißt, der zwischengeschaltete Schalter Swt_{APE} und der weitere Schalter Swt_{MES} sind geschlossen, der erste Schalter Swt_{IPE} und der vierte Schalter Swt_{RE} sind geöffnet,
- Schritt V12: Messung der über dem Messwiderstand 110 abfallenden Spannung Uₐₘ,
- Schritt V13: Vergleich der über dem Messwiderstand 110 abfallenden Spannung Uₐₘ mit einem Grenzwert und Bewertung, ob sowohl die zweite als auch die dritte Leitung 203, 204 intakt sind. In diesem Fall endet das Verfahren. Andernfalls, wenn also eine der zweiten Leitung 203 und der dritten Leitung 204 unterbrochen ist: weiter mit Schritt V14.
- Schritt V14: Herstellen einer Schaltkonfiguration gemäß Figur 2 mit geschlossenem zwischengeschaltetem Schalter Swt_{APE} und geöffnetem weiteren Schalter Swt_{MES} sowie geschlossenem ersten Schalter Swt_{IPE} und geöffnetem vierten Schalter Swt_{RE},
- Schritt V15: Messung der über dem Messwiderstand 110 abfallenden Spannung Uₐₘ,
- Schritt V16: Vergleich der an dem Messwiderstand 110 abfallende Spannung Uₐₘ mit dem oberen Schwellwert und Bewertung, dass die zweite Leitung 203 unterbrochen ist, wenn sie größer als der obere Schwellwert ist. Ist sie nicht größer als der obere Schwellwert, wird bewertet, dass die dritte Leitung 204 unterbrochen ist.

Anknüpfend an das zweite Beispiel kann beispielsweise im Anschluss an die Feststellung, dass keine der beiden Leitungen 203, 204 unterbrochen ist, der Wert des Kalibrierwidertands 212 bestimmt werden.

Dazu wird wiederum zunächst eine Schaltkonfiguration gemäß Figur 3 hergestellt (Schritt 21), das heißt, der zwischengeschaltete Schalter Swt_{APE} und der weitere Schalter Swt_{MES} sind geschlossen, der erste Schalter Swt_{IPE} und der vierte Schalter Swt_{RE} sind geöffnet und es wird verifiziert, dass die am Messwiderstand 110 abfallende Spannung kleiner als ein vorgegebener Grenzwert (im Beispiel 100 mV) ist (Schritt 22). Bei bekanntem Wert des Messwiderstands 110 und bekanntem Wert des durch die Stromquelle 101 generierten Stroms I und bei Vernachlässigung der Widerstände der Leitungen 203, 204 ergibt sich der Wert des Kalibrierwidertands 212 unmittelbar auf Basis der kirchhoffschen Regeln und des ohmschen Gesetztes aus der am Messwiderstand 110 abfallenden Spannung Uₐₘ (Schritt 23).

Eine Ungenauigkeit bei diesem Vorgehen resultiert allerdings daraus, dass die Leitungswiderstände vernachlässigt werden, sodass der Wert des Kalibrierwiderstands 212 entsprechend zu groß bestimmt wird.

Um dies zu verbessern, kann nachfolgend eine weitere Messung der am Messwiderstand 110 abfallenden Spannung Uₐₘ erfolgen (Schritt 25), und zwar bei geschlossenem zwischengeschalteten Schalter Swt_{APE} und geöffnetem weiteren Schalter Swt_{MES}, wie in Figur 2 (Schritt 24). Optional kann der durch die Stromquelle 101 eingeprägte Strom I während dieser weiteren Messung größer gewählt werden als er es während einer Messung der Sauerstoffkonzentration, die üblicherweise ebenfalls in dieser Schalterstellung erfolgt, in der Regel der Fall ist (zum Beispiel 10mA statt zuvor 0,1mA). Auf diese Weise verbessert sich in der Regel die Genauigkeit des Verfahrens.

Es ist anschließend möglich, den Wert des Widerstands der zweiten Leitung 203 auf Basis dieser Messungen sowie der kirchhoffschen Regeln und des ohmschen Gesetztes zu bestimmen (Schritt 26). Der Einfluss des Widerstands der zweiten Leitung 203 auf das Ergebnis der ersten Messung zur Bestimmung des Kalibrierwiderstands 212 kann dann kompensiert werden.

Um auch den Einfluss des Widerstands der dritten Leitung 204 auf das Ergebnis der ersten Messung zur Bestimmung des Kalibrierwiderstands 212 zu kompensieren, kann angenommen werden, dass der Widerstand der dritten Leitung 204 gleich dem Widerstand der der zweiten Leitung 203 ist. Dies ist gerechtfertigt, da im Fahrzeug die Leitungen 201, 202, 203, 204 üblicherweise in einem gemeinsamen Kabelstrang verlegt werden, die gleiche Länge aufweisen und damit einen im Allgemeinen sehr ähnlichen Widerstand aufweisen.

Eine entsprechende zusätzliche oder alternative Beschaltung und Messung vorausgesetzt, ist es alternativ auch möglich, den Widerstand der dritten Leitung 204 analog zum obigen durch Messung zu erschließen und so den Einfluss der dritten Leitung 204 auf das Ergebnis zu kompensieren.

Die oben erläuterten Schritte zur Bestimmung des Werts des Kalibrierwidertands 212 sind in der Figur 6 nochmals anhand eines Flussdiagramms dargestellt.

## Patentansprüche

1. Verfahren zur Diagnose von elektrischen Leitungen zwischen einer Breitband-Lambdasonde (1) und einem Steuergerät (2) für eine Brennkraftmaschine,
wobei die Breitband-Lambdasonde (1) einen ersten elektrischen Anschluss (IPE) und einen zweiten elektrischen Anschluss (APE) und einen dritten elektrischen Anschluss (MES) aufweist und eine elektrochemische Pumpzelle (211) aufweist, die zwischen den ersten elektrischen Anschluss (IPE) und den zweiten elektrischen Anschluss (APE) geschaltet ist, und einen elektrischen Kalibierwiderstand (212) aufweist, der zwischen den zweiten elektrischen Anschluss (APE) und den dritten elektrischen Anschluss (MES) geschaltet ist;
wobei das Steuergerät (2) einen ersten elektrischen Eingang (IPE') aufweist und einen zweiten elektrischen Eingang (APE') aufweist und einen dritten elektrischen Eingang (MES') aufweist und einen Messwiderstand (110) aufweist, der den zweiten Eingang (APE') mit dem dritten Eingang (MES') verbindet, und eine Stromquelle (101) aufweist, die durch einen zwischengeschalteten Schalter (Swt_{APE}) des Steuergeräts (2) mit dem zweiten Eingang (APE') verbindbar ist, und das Steuergerät (2) einen weiteren Schalter (Swt_{MES}) aufweist und einen Referenzwiderstand (102) aufweist, wobei der der Referenzwiderstand (102) einerseits über den weiteren Schalter (Swt_{MES}) mit dem dritten Eingang (MES') und mit dem Messwiderstand (110) verbindbar ist und andererseits mit einem Bezugspotential (103) des Steuergeräts (2) verbunden ist; und wobei das Steuergerät (2) ein Messmittel (V) aufweist, um die über dem Messwiderstand (110) abfallende Spannung (Uₐₘ) zu messen;
wobei eine erste Leitung (202) den ersten Anschluss (IPE) der Breitband-Lambdasonde (1) mit dem ersten Eingang (IPE') des Steuergeräts (2) verbindet, wobei eine zweite Leitung (203) den zweiten Anschluss (APE) der Breitband-Lambdasonde (1) mit dem zweiten Eingang (IPE') des Steuergeräts (2) verbindet,
wobei eine dritte Leitung (204) den dritten Anschluss (MES) der Breitband-Lambdasonde (1) mit dem dritten Eingang (MES') des Steuergeräts (2) verbindet;
wobei die Diagnose in folgenden Schritten erfolgt:
- Messen der über dem Messwiderstand (110) abfallenden Spannung (Uₐₘ) bei geschlossenem zwischengeschalteten Schalter (Swt_{APE}) und geöffnetem weiteren Schalter (Swt_{MES}),
- Bewerten, ob die zweite Leitung (203) unterbrochen ist und Bewerten, ob die dritte Leitung (204) unterbrochen ist, wobei die jeweilige Bewertungen auf Basis der an dem Messwiderstand (110) abfallenden Spannung (Uₐₘ) erfolgt, indem die Bewertung, ob die zweite Leitung (203) unterbrochen ist, auf Basis des Vergleichs der an dem Messwiderstand (110) abfallenden Spannung (Uₐₘ) mit einem oberen vorgegebenen Schwellwert erfolgt und die Bewertung, ob die dritte Leitung (204) unterbrochen ist, auf Basis des Vergleichs der an dem Messwiderstand (110) abfallenden Spannung (Uₐₘ) mit einem unteren vorgegebenen Schwellwert erfolgt, und dass bewertet wird, dass die zweite Leitung (203) unterbrochen ist, wenn die an dem Messwiderstand (110) abfallende Spannung (Uₐₘ) größer ist als ein oberer vorgegebener Schwellwert;
dass die dritte Leitung (204) unterbrochen ist, wenn die an dem Messwiderstand (110) abfallende Spannung (Uₐₘ) kleiner ist als ein unterer vorgegebener Schwellwert; und dass weder die zweite Leitung (203) unterbrochen ist noch die dritte Leitung (204) unterbrochen ist, wenn die an dem Messwiderstand (110) abfallende Spannung (Uₐₘ) größer ist als der untere Schwellwert und kleiner ist als der obere Schwellwert.

2. Verfahren zur Diagnose von elektrischen Leitungen zwischen einer Breitband-Lambdasonde (1) und einem Steuergerät (2) für eine Brennkraftmaschine,
wobei die Breitband-Lambdasonde (1) einen ersten elektrischen Anschluss (IPE) und einen zweiten elektrischen Anschluss (APE) und einen dritten elektrischen Anschluss (MES) aufweist und eine elektrochemische Pumpzelle (211) aufweist, die zwischen den ersten elektrischen Anschluss (IPE) und den zweiten elektrischen Anschluss (APE) geschaltet ist, und einen elektrischen Kalibierwiderstand (212) aufweist, der zwischen den zweiten elektrischen Anschluss (APE) und den dritten elektrischen Anschluss (MES) geschaltet ist;
wobei das Steuergerät (2) einen ersten elektrischen Eingang (IPE') aufweist und einen zweiten elektrischen Eingang (APE') aufweist und einen dritten elektrischen Eingang (MES') aufweist und einen Messwiderstand (110) aufweist, der den zweiten Eingang (APE') mit dem dritten Eingang (MES') verbindet, und eine Stromquelle (101) aufweist, die durch einen zwischengeschalteten Schalter (Swt_{APE}) des Steuergeräts (2) mit dem zweiten Eingang (APE') verbindbar ist, und das Steuergerät (2) einen weiteren Schalter (Swt_{MES}) aufweist und einen Referenzwiderstand (102) aufweist, wobei der der Referenzwiderstand (102) einerseits über den weiteren Schalter (Swt_{MES}) mit dem dritten Eingang (MES') und mit dem Messwiderstand (110) verbindbar ist und andererseits mit einem Bezugspotential (103) des Steuergeräts (2) verbunden ist; und wobei das Steuergerät (2) ein Messmittel (V) aufweist, um die über dem Messwiderstand (110) abfallende Spannung (Uₐₘ) zu messen;
wobei eine erste Leitung (202) den ersten Anschluss (IPE) der Breitband-Lambdasonde (1) mit dem ersten Eingang (IPE') des Steuergeräts (2) verbindet,
wobei eine zweite Leitung (203) den zweiten Anschluss (APE) der Breitband-Lambdasonde (1) mit dem zweiten Eingang (IPE') des Steuergeräts (2) verbindet,
wobei eine dritte Leitung (204) den dritten Anschluss (MES) der Breitband-Lambdasonde (1) mit dem dritten Eingang (MES') des Steuergeräts (2) verbindet;
wobei die Diagnose in folgenden Schritten erfolgt:
- Messen der über dem Messwiderstand (110) abfallenden Spannung (Uₐₘ) bei geschlossenem zwischengeschalteten Schalter (Swt_{APE}) und geschlossenem weiteren Schalter (Swt_{MES});
- Bewerten dass weder die zweite Leitung (203) unterbrochen ist noch die dritte Leitung (204) unterbrochen ist, wenn die an dem Messwiderstand (110) abfallende Spannung (Uₐₘ) kleiner ist als ein vorgegebener Grenzwert; sonst:
- Messen der über dem Messwiderstand (110) abfallenden Spannung (Uₐₘ) bei geschlossenem zwischengeschalteten Schalter (Swt_{APE}) und geöffnetem weiteren Schalter (Swt_{MES});
- Bewerten, dass die zweite Leitung (203) unterbrochen ist, wenn die über dem Messwiderstand (110) abfallenden Spannung (Uₐₘ) größer ist als ein oberer Schwellwert, und bewerten, dass die dritte Leitung (204) unterbrochen ist, wenn die über dem Messwiderstand (110) abfallenden Spannung (Uₐₘ) nicht größer ist als ein oberer Schwellwert.

3. Verfahren nach einem der Ansprüche 1 oder 2, **dadurch**
**gekennzeichnet, dass**
die Breitband-Lambdasonde (1) einen vierten elektrischen Anschluss (RE) aufweist und eine elektrochemische Referenzzelle (210) aufweist, die zwischen den ersten elektrischen Anschluss (IPE) und den vierten elektrischen Anschluss (RE) geschaltet ist.

4. Verfahren nach einem der Ansprüche 1 bis 3, **dadurch gekennzeichnet, dass** das Messmittel (V) ein Analog-Digital-Wandler ist.

5. Verfahren nach einem der Ansprüche 1 bis 4, **dadurch gekennzeichnet, dass** das Steuergerät (2) einen Multiplexer aufweist, der zwei Eingänge aufweist, die mit dem zweiten Eingang (APE') und den dritten Eingang (MES') des Steuergeräts (2) verbunden sind, und der ausgangsseitig mit dem Messmittel (V) verbunden ist.

6. Vorrichtung mit einer Breitband-Lambdasonde (1) und einem Steuergerät (2) für eine Brennkraftmaschine,
wobei die Breitband-Lambdasonde (1) einen ersten elektrischen Anschluss (IPE) und einen zweiten elektrischen Anschluss (APE) und einen dritten elektrischen Anschluss (MES) aufweist und eine elektrochemische Pumpzelle (211) aufweist, die zwischen den ersten elektrischen Anschluss (IPE) und den zweiten elektrischen Anschluss (APE) geschaltet ist, und einen elektrischen Kalibierwiderstand (212) aufweist, der zwischen den zweiten elektrischen Anschluss (APE) und den dritten elektrischen Anschluss (MES) geschaltet ist;
wobei das Steuergerät (2) einen ersten elektrischen Eingang (IPE') aufweist und einen zweiten elektrischen Eingang (APE') aufweist und einen dritten elektrischen Eingang (MES') aufweist und einen Messwiderstand (110) aufweist, der den zweiten Eingang (APE') mit dem dritten Eingang (MES') verbindet, und eine Stromquelle (101) aufweist, die durch einen zwischengeschalteten Schalter (Swt_{APE}) des Steuergeräts (2) mit dem zweiten Eingang (APE') verbindbar ist, und das Steuergerät (2) einen weiteren Schalter (Swt_{MES}) aufweist und einen Referenzwiderstand (102) aufweist, wobei der der Referenzwiderstand (102) einerseits über den weiteren Schalter (Swt_{MES}) mit dem dritten Eingang (MES') und mit dem Messwiderstand (110) verbindbar ist und andererseits mit einem Bezugspotential (103) des Steuergeräts (2) verbunden ist; und wobei das Steuergerät (2) ein Messmittel (V) aufweist, um die über dem Messwiderstand (110) abfallende Spannung (Uₐₘ) zu messen;
wobei eine erste Leitung (202) den ersten Anschluss (IPE) der Breitband-Lambdasonde (1) mit dem ersten Eingang (IPE') des Steuergeräts (2) verbindet, wobei eine zweite Leitung (203) den zweiten Anschluss (APE) der Breitband-Lambdasonde (1) mit dem zweiten Eingang (IPE') des Steuergeräts (2) verbindet,
wobei eine dritte Leitung (204) den dritten Anschluss (MES) der Breitband-Lambdasonde (1) mit dem dritten Eingang (MES') des Steuergeräts (2) verbindet;
wobei das Steuergerät dazu eingerichtet ist, ein Verfahren nach einem der vorangehenden Ansprüche auszuführen.

## Claims

1. Method for diagnosing electrical lines between a broadband lambda probe (1) and a control unit (2) for an internal combustion engine,
wherein the broadband lambda probe (1) has a first electrical connection (IPE) and a second electrical connection (APE) and a third electrical connection (MES) and has an electrochemical pump cell (211), which is connected between the first electrical connection (IPE) and the second electrical connection (APE), and an electrical calibration resistor (212) connected between the second electrical connection (APE) and the third electrical connection (MES);
wherein the control unit (2) has a first electrical input (IPE') and has a second electrical input (APE') and has a third electrical input (MES') and has a measurement resistor (110), which connects the second input (APE') to the third input (MES'), and has a current source (101), which can be connected to the second input (APE') by means of an interposed switch (Swt_{APE}) of the control unit (2), and the control unit (2) has a further switch (Swt_{MES}) and has a reference resistor (102), wherein the reference resistor (102) can be connected on the one hand to the third input (MES') and to the measurement resistor (110) and on the other hand to a reference potential (103) of the control unit (2) via the further switch (Swt_{MES}); and wherein the control unit (2) has a measurement means (V) for measuring the voltage (Uₐₘ) dropped across the measurement resistor (110);
wherein a first line (202) connects the first connection (IPE) of the broadband lambda probe (1) to the first input (IPE') of the control unit (2), wherein a second line (203) connects the second connection (APE) of the broadband lambda probe (1) to the second input (IPE') of the control unit (2),
wherein a third line (204) connects the third connection (MES) of the broadband lambda probe (1) to the third input (MES') of the control unit (2);
wherein the diagnosis is carried out in the following steps:
- measuring the voltage (Uₐₘ) dropped across the measurement resistor (110) when the interposed switch (Swt_{APE}) is closed and the further switch (Swt_{MES}) is open,
- evaluating whether the second line (203) is interrupted and evaluating whether the third line (204) is interrupted, wherein the respective evaluations are carried out on the basis of the voltage (Uₐₘ) dropped across the measurement resistor (110) by virtue of the evaluation as to whether the second line (203) is interrupted being carried out on the basis of the comparison of the voltage (Uₐₘ) dropped across the measurement resistor (110) with an upper predefined threshold value, and the evaluation as to whether the third line (204) is interrupted being carried out on the basis of the comparison of the voltage (Uₐₘ) dropped across the measurement resistor (110) with a lower predefined threshold value, and it is evaluated that the second line (203) is interrupted if the voltage (Uₐₘ) dropped across the measurement resistor (110) is greater than an upper predefined threshold value; that the third line (204) is interrupted if the voltage (Uₐₘ) dropped across the measurement resistor (110) is less than a lower predefined threshold value; and that neither the second line (203) nor the third line (204) is interrupted if the voltage (Uₐₘ) dropped across the measurement resistor (110) is greater than the lower threshold value and less than the upper threshold value.

2. Method for diagnosing electrical lines between a broadband lambda probe (1) and a control unit (2) for an internal combustion engine,
wherein the broadband lambda probe (1) has a first electrical connection (IPE) and a second electrical connection (APE) and a third electrical connection (MES) and has an electrochemical pump cell (211), which is connected between the first electrical connection (IPE) and the second electrical connection (APE), and an electrical calibration resistor (212) connected between the second electrical connection (APE) and the third electrical connection (MES);
wherein the control unit (2) has a first electrical input (IPE') and has a second electrical input (APE') and has a third electrical input (MES') and has a measurement resistor (110), which connects the second input (APE') to the third input (MES'), and has a current source (101), which can be connected to the second input (APE') by means of an interposed switch (Swt_{APE}) of the control unit (2), and the control unit (2) has a further switch (Swt_{MES}) and has a reference resistor (102), wherein the reference resistor (102) can be connected on the one hand to the third input (MES') and to the measurement resistor (110) and on the other hand to a reference potential (103) of the control unit (2) via the further switch (Swt_{MES}); and wherein the control unit (2) has a measurement means (V) for measuring the voltage (Uₐₘ) dropped across the measurement resistor (110);
wherein a first line (202) connects the first connection (IPE) of the broadband lambda probe (1) to the first input (IPE') of the control unit (2), wherein a second line (203) connects the second connection (APE) of the broadband lambda probe (1) to the second input (IPE') of the control unit (2),
wherein a third line (204) connects the third connection (MES) of the broadband lambda probe (1) to the third input (MES') of the control unit (2);
wherein the diagnosis is carried out in the following steps:
- measuring the voltage (Uₐₘ) dropped across the measurement resistor (110) when the interposed switch (Swt_{APE}) is closed and the further switch (Swt_{MES}) is closed;
- evaluating that neither the second line (203) nor the third line (204) is interrupted if the voltage (Uₐₘ) dropped across the measurement resistor (110) is less than a predefined limit value; otherwise:
- measuring the voltage (Uₐₘ) dropped across the measurement resistor (110) when the interposed switch (Swt_{APE}) is closed and the further switch (Swt_{MES}) is open;
- evaluating that the second line (203) is interrupted if the voltage (Uₐₘ) dropped across the measurement resistor (110) is greater than an upper threshold value, and evaluating that the third line (204) is interrupted, if the voltage (Uₐₘ) dropped across the measurement resistor (110) is not greater than an upper threshold value.

3. Method according to either of Claims 1 and 2, **characterized in that** the broadband lambda probe (1) has a fourth electrical connection (RE) and has
an electrochemical reference cell (210) connected between the first electrical connection (IPE) and the fourth electrical connection (RE).

4. Method according to one of Claims 1 to 3, **characterized in that** the measurement means (V) is an analogue-to-digital converter.

5. Method according to one of Claims 1 to 4, **characterized in that** the control unit (2) has a multiplexer which has two inputs connected to the second input (APE') and the third input (MES') of the control unit (2) and which is connected on the output side to the measurement means (V).

6. Apparatus having a broadband lambda probe (1) and a control unit (2) for an internal combustion engine,
wherein the broadband lambda probe (1) has a first electrical connection (IPE) and a second electrical connection (APE) and a third electrical connection (MES) and has an electrochemical pump cell (211), which is connected between the first electrical connection (IPE) and the second electrical connection (APE), and an electrical calibration resistor (212) connected between the second electrical connection (APE) and the third electrical connection (MES);
wherein the control unit (2) has a first electrical input (IPE') and has a second electrical input (APE') and has a third electrical input (MES') and has a measurement resistor (110), which connects the second input (APE') to the third input (MES'), and has a current source (101), which can be connected to the second input (APE') by means of an interposed switch (Swt_{APE}) of the control unit (2), and the control unit (2) has a further switch (Swt_{MES}) and has a reference resistor (102), wherein the reference resistor (102) can be connected on the one hand to the third input (MES') and to the measurement resistor (110) and on the other hand to a reference potential (103) of the control unit (2) via the further switch (Swt_{MES}); and wherein the control unit (2) has a measurement means (V) for measuring the voltage (Uₐₘ) dropped across the measurement resistor (110);
wherein a first line (202) connects the first connection (IPE) of the broadband lambda probe (1) to the first input (IPE') of the control unit (2),
wherein a second line (203) connects the second connection (APE) of the broadband lambda probe (1) to the second input (IPE') of the control unit (2), wherein a third line (204) connects the third connection (MES) of the broadband lambda probe (1) to the third input (MES') of the control unit (2);
wherein the control unit is configured to carry out a method according to one of the preceding claims.

## Revendications

1. Procédé de diagnostic de lignes électriques entre une sonde lambda à large bande (1) et un appareil de commande (2) pour un moteur à combustion interne,
la sonde lambda à large bande (1) comportant une première borne électrique (IPE) et une deuxième borne électrique (APE) et une troisième borne électrique (MES) et comportant une cellule de pompe (211) électrochimique, qui est commutée entre la première borne électrique (IPE) et la deuxième borne électrique (APE), et comportant une résistance d'étalonnage (212) électrique, qui est commutée entre la deuxième borne électrique (APE) et la troisième borne électrique (MES) ;
l'appareil de commande (2) comportant une première entrée électrique (IPE') et comportant une deuxième entrée électrique (APE') et comportant une troisième entrée électrique (MES') et comportant une résistance de mesure (110), qui relie la deuxième entrée (APE') à la troisième entrée (MES'), et comportant une source de courant (101), qui peut être reliée à la deuxième entrée (APE') par un commutateur (Swt_{APE}) intercalé de l'appareil de commande (2), et l'appareil de commande (2) comportant un autre commutateur (Swt_{MES}) et comportant une résistance de référence (102), la résistance de référence (102) pouvant être reliée d'une part à la troisième entrée (MES') et à la résistance de mesure (110) par l'autre commutateur (Swt_{MES}) et étant reliée d'autre part à un potentiel de référence (103) de l'appareil de commande (2) ; et l'appareil de commande (2) comportant un moyen de mesure (V) pour mesurer la chute de tension (Uₐₘ) sur la résistance de mesure (110) ;
une première ligne (202) reliant la première borne (IPE) de la sonde lambda à large bande (1) à la première entrée (IPE') de l'appareil de commande (2), une deuxième ligne (203) reliant la deuxième borne (APE) de la sonde lambda à large bande (1) à la deuxième entrée (IPE') de l'appareil de commande (2),
une troisième ligne (204) reliant la troisième borne (MES) de la sonde lambda à large bande (1) à la troisième entrée (MES') de l'appareil de commande (2) ;
le diagnostic étant effectué par des étapes suivantes :
- mesure de la chute de tension (Uₐₘ) sur la résistance de mesure (110) lorsque le commutateur (Swt_{APE}) intercalé est fermé et lorsque l'autre commutateur (Swt_{MES}) est ouvert,
- évaluation si la deuxième ligne (203) est interrompue et évaluation si la troisième ligne (204) est interrompue, les évaluations respectives étant effectuées sur la base de la chute de tension (Uₐₘ) sur la résistance de mesure (110), en ce que l'évaluation si la deuxième ligne (203) est interrompue, est effectuée sur la base de la comparaison de la chute de tension (Uₐₘ) sur la résistance de mesure (110) à une valeur de seuil supérieure prédéfinie et l'évaluation si la troisième ligne (204) est interrompue, est effectuée sur la base de la comparaison de la chute de tension (Uₐₘ) sur la résistance de mesure (110) à une valeur de seuil inférieure prédéfinie, évaluation que la deuxième ligne (203) est interrompue lorsque la chute de tension (Uₐₘ) sur la résistance de mesure (110) est supérieure à une valeur de seuil supérieure prédéfinie ; que la troisième ligne (204) est interrompue lorsque la chute de tension (Uₐₘ) sur la résistance de mesure (110) est inférieure à une valeur de seuil inférieure prédéfinie ; et que ni la deuxième ligne (203) ni la troisième ligne (204) ne sont interrompues lorsque la chute de tension (Uₐₘ) sur la résistance de mesure (110) est supérieure à la valeur de seuil inférieure et est inférieure à la valeur de seuil supérieure.

2. Procédé de diagnostic de lignes électriques entre une sonde lambda à large bande (1) et un appareil de commande (2) pour un moteur à combustion interne,
la sonde lambda à large bande (1) comportant une première borne électrique (IPE) et une deuxième borne électrique (APE) et une troisième borne électrique (MES) et comportant une cellule de pompe (211) électrochimique, qui est commutée entre la première borne électrique (IPE) et la deuxième borne électrique (APE), et comportant une résistance d'étalonnage (212) électrique, qui est commutée entre la deuxième borne électrique (APE) et la troisième borne électrique (MES) ;
l'appareil de commande (2) comportant une première entrée électrique (IPE') et comportant une deuxième entrée électrique (APE') et comportant une troisième entrée électrique (MES') et comportant une résistance de mesure (110), qui relie la deuxième entrée (APE') à la troisième entrée (MES'), et comportant une source de courant (101), qui peut être reliée à la deuxième entrée (APE') par un commutateur (Swt_{APE}) intercalé de l'appareil de commande (2), et l'appareil de commande (2) comportant un autre commutateur (Swt_{MES}) et comportant une résistance de référence (102), la résistance de référence (102) pouvant être reliée d'une part à la troisième entrée (MES') et à la résistance de mesure (110) par l'autre commutateur (Swt_{MES}) et étant reliée d'autre part à un potentiel de référence (103) de l'appareil de commande (2) ; et l'appareil de commande (2) comportant un moyen de mesure (V) pour mesurer la chute de tension (Uₐₘ) sur la résistance de mesure (110) ;
une première ligne (202) reliant la première borne (IPE) de la sonde lambda à large bande (1) à la première entrée (IPE') de l'appareil de commande (2), une deuxième ligne (203) reliant la deuxième borne (APE) de la sonde lambda à large bande (1) à la deuxième entrée (IPE') de l'appareil de commande (2),
une troisième ligne (204) reliant la troisième borne (MES) de la sonde lambda à large bande (1) à la troisième entrée (MES') de l'appareil de commande (2) ;
le diagnostic étant effectué par des étapes suivantes :
- mesure de la chute de tension (Uₐₘ) sur la résistance de mesure (110) lorsque le commutateur (Swt_{APE}) intercalé est fermé et lorsque l'autre commutateur (Swt_{MES}) est ouvert ;
- évaluation que ni la deuxième ligne (203) ni la troisième ligne (204) ne sont interrompues lorsque la chute de tension (Uₐₘ) sur la résistance de mesure (110) est inférieure à une valeur limite prédéfinie ; sinon :
- mesure de la chute de tension (Uₐₘ) sur la résistance de mesure (110) lorsque le commutateur (Swt_{APE}) intercalé est fermé et lorsque l'autre commutateur (Swt_{MES}) est ouvert ;
- évaluation que la deuxième ligne (203) est interrompue lorsque la chute de tension (Uₐₘ) sur la résistance de mesure (110) est supérieure à une valeur de seuil supérieure, et évaluation que la troisième ligne (204) est interrompue lorsque la chute de tension (Uₐₘ) sur la résistance de mesure (110) n'est pas supérieure à une valeur de seuil supérieure.

3. Procédé selon l'une des revendications 1 à 2, **caractérisé en ce que**
la sonde lambda à large bande (1) comporte une quatrième borne électrique (RE) et une cellule de référence (210) électrochimique, qui est commutée entre la première borne électrique (IPE) et la quatrième borne électrique (RE).

4. Procédé selon l'une des revendications 1 à 3, **caractérisé en ce que** le moyen de mesure (V) est un convertisseur analogique-numérique.

5. Procédé selon l'une des revendications 1 à 4, **caractérisé en ce que** l'appareil de commande (2) comporte un multiplexeur, qui comporte deux entrées, qui sont reliées à la deuxième entrée (APE') et à la troisième entrée (MES') de l'appareil de commande (2), et qui est relié côté sortie au moyen de mesure (V).

6. Dispositif avec une sonde lambda à large bande (1) et un appareil de commande (2) pour un moteur à combustion interne,
la sonde lambda à large bande (1) comportant une première borne électrique (IPE) et une deuxième borne électrique (APE) et une troisième borne électrique (MES) et comportant une cellule de pompe (211) électrochimique, qui est commutée entre la première borne électrique (IPE) et la deuxième borne électrique (APE), et comportant une résistance d'étalonnage (212) électrique, qui est commutée entre la deuxième borne électrique (APE) et la troisième borne électrique (MES) ;
l'appareil de commande (2) comportant une première entrée électrique (IPE') et comportant une deuxième entrée électrique (APE') et comportant une troisième entrée électrique (MES') et comportant une résistance de mesure (110), qui relie la deuxième entrée (APE') à la troisième entrée (MES'), et comportant une source de courant (101), qui peut être reliée à la deuxième entrée (APE') par un commutateur (Swt_{APE}) intercalé de l'appareil de commande (2), et l'appareil de commande (2) comportant un autre commutateur (Swt_{MES}) et comportant une résistance de référence (102), la résistance de référence (102) pouvant être reliée d'une part à la troisième entrée (MES') et à la résistance de mesure (110) par l'autre commutateur (Swt_{MES}) et étant reliée d'autre part à un potentiel de référence (103) de l'appareil de commande (2) ; et l'appareil de commande (2) comportant un moyen de mesure (V) pour mesurer la chute de tension (Uₐₘ) sur la résistance de mesure (110) ;
une première ligne (202) reliant la première borne (IPE) de la sonde lambda à large bande (1) à la première entrée (IPE') de l'appareil de commande (2),
une deuxième ligne (203) reliant la deuxième borne (APE) de la sonde lambda à large bande (1) à la deuxième entrée (IPE') de l'appareil de commande (2), une troisième ligne (204) reliant la troisième borne (MES) de la sonde lambda à large bande (1) à la troisième entrée (MES') de l'appareil de commande (2),
l'appareil de commande étant mis au point pour exécuter un procédé selon l'une des revendications précédentes.
